# EUROPÄISCHE PATENTSCHRIFT

(11) **EP 2 329 929 B1**
(45) Veröffentlichungstag und Bekanntmachung des Hinweises auf die Patenterteilung: **21.03.2012**
(21) Anmeldenummer: 09014886.7
(22) Anmeldetag: 01.12.2009
(51) Int. Cl.: B26D 3/26, B26D 7/01, B26D 7/06

(54) **Melonenschneider**
Melon cutter
Coupe-melon

(43) Veröffentlichungstag der Anmeldung: 08.06.2011
(73) Patentinhaber: Llombart Gavaldá, Juan, 77933 Lahr (DE)
(72) Erfinder: Llombart Gavaldá, Juan, 77933 Lahr (DE)
(74) Vertreter: Sparing Röhl Henseler

(56) Entgegenhaltungen:
- EP-A1- 1 759 819
- WO-A1-2008/011671

## Beschreibung

Die Erfindung betrifft einen Melonenschneider mit einem Schneidwerkzeug nach dem Oberbegriff des Anspruchs 1.

Aus EP 1 759 819 A1 ist ein Melonenschneider nach dem Oberbegriff des Anspruchs 1 bekannt. Dieser Melonenschneider umfasst einen Pressentisch, der als Messeranordnung ausgeführt ist, über dem ein Pressenmechanismus angebracht ist, der mit einem beweglichen Bedienhebel betätigt wird. Bei Benutzung wird eine Melone auf der Messeranordnung platziert und der Bedienhebel betätigt, wobei der Pressenmechanismus sich zur Messeranordnung bewegt und dabei die Melone zerschneidet.

Aus DE 20 2005 014 415 U1 ist ein Melonenschneider bekannt. Um eine Melone zu zerteilen, legt man diese in die Auffangschale des Melonenschneiders. Die sternenförmig gelagerten Messer werden durch einen Seitenhebel durch die Melone gedrückt. Um eine Verletzungsgefahr während des Zerteilens auszuschließen, dient die Auffangschale gleichzeitig als Schutz. Zieht man den Seitenhebel wieder nach oben, fährt der Messerblock wieder in die Ausgangsstellung zurück. In der Auffangschale liegen die gleichmäßig zerteilten Melonenstücke. Der Messerblock und der Haltering sind auswechselbar und in unterschiedlicher Messeranzahl erhältlich. Nachteilig ist, dass die Melonenstücke bei wechselnden Melonenqualitäten, d.h. insbesondere verschieden weiches Fruchtfleisch, nicht hinreichend gleichmäßig geschnitten sind. Die Melonenstücke sind nicht nur unterschiedlich groß, sondern auch teilweise unförmig geschnitten.

Aus DE 20 2007 008 055 U1 ist ein Melonenschneider, insbesondere Wassermelonenschneider, bekannt, der aus Messern, Klingen, Schneiden oder Griffen aus Stahl oder Hartplastik und ihren Haltevorrichtungen besteht. Die Messer bestehen aus machetenähnlichen oder nur im oberen Bereich der Mitte miteinander verbundenen Messerformen oder aus Schneidedrähten in Sternenform mit Drahtführungsschienen. Mit Hilfe eines solchen Melonenschneiders lassen sich die Früchte in gleichgroße Stücke schneiden, etwa in Achtel-Stücke, in Scheiben oder in bevorzugte Formen durch Verwendung eines Formschneiders. Der Melonenschneider besteht entweder vollständig oder in Teilen aus Edelstahl oder vollständig aus Hart-Kunststoff. Dabei sind entweder die Messer, der Umrandungsring, der gleichzeitig Halte- und Befestigungsring für die Messer und Griffe ist, sowie die Griffe, falls welche angebracht werden, aus Edelstahl gefertigt. Durch einfaches Aufsetzen und Herunterdrücken des Halte- und Befestigungsrings des Melonenschneiders können die Melonen von jedermann geschnitten oder in Form gebracht werden. Nachteilig ist wiederum, dass die Melonenstücke bei wechselnden Melonenqualitäten nicht hinreichend gleichmäßig geschnitten werden. Die Melonenstücke sind nicht nur unterschiedlich groß, sondern auch teilweise unförmig geschnitten.

Aus DE 1 875 662 U ist eine Vorrichtung zum Mehrfachschneiden von Gütern, insbesondere von Gemüse, wie z. B. Zwiebeln, Möhren, Gurken oder dergleichen, bekannt. In einem Schwenkrahmen sitzt eine Anzahl von zueinander parallel angeordneter Messer, die durch den Schwenkrahmen auf- und niederbewegt werden. Die vorgenannten Nachteile gelten hier in gleicher Weise.

Aufgabe der Erfindung ist es daher, einen Melonenschneider mit einem Schneidwerkzeug zu schaffen, der Melonen unabhängig von der Melonenqualität gleichmäßig in Stücke schneidet.

Diese Aufgabe wird durch die Merkmale des Anspruchs 1 gelöst.

Hierdurch wird ein Melonenschneider geschaffen, bei dem die Melonen durch eine Schneidplatte gedrückt werden. Die Melonen werden bewegt, während die Messer feststehend an einem Tisch angeordnet sein können. Bei dem Vorgang des Durchdrückens werden die Melonen zudem stabilisiert, so dass Deformationen der Fruchtkörper minimiert werden. Die Schnittqualität der Melonenstücke ist deshalb deutlich verbessert..

Die Stabilisierung der auf die Schneidplatte gedrückten Melone wird durch ein Backenpaar erreicht, das dem Zwangslauf eine bestimmte Führungsbahn zuordnet. Dadurch, dass die Backen eine Melone vorzugsweise nur entlang eines Teilumfangsabschnitts umfassen, kommt es dabei zu keinem Verquetschen der Melonen. Die Melonen können unter der Vorschubbewegung des Druckstempels an den Führungsplatten vorbeigleiten, wobei die Form der Melonen der Kontur der Führungsplatten folgen kann. Die Zentrierung auf das Messer in Sternenform wird dadurch sichergestellt.

Das Messer in Sternenform kann zur Stabilisierung der Melonen beim Schneidvorgang ebenfalls beitragen. Über eine Einlaufsenke, die sich um eine mittige Spitze des Messers erstreckt, kann der auf die Schneidplatte gedrückten Melone eine bessere Aufstandsfläche verliehen werden. Beim Schneidvorgang eilt eine mittige Schnittlinie äußeren Schnittlinien voraus. In Vorschubrichtung gelangt die im Wesentlichen kugelförmige Melone bereits formbedingt am Außenumfang später in Eingriff mit dem Messer.

Der Druckstempel kann einen Kopf aufweisen, der eine flächige Druckauflage an der Melone ermöglicht. In Verbindung mit den Führungsplatten und dem Messer in Sternenform wird die Melone beim Schneidvorgang quasi gekapselt.

Die Auffangvorrichtung ist vorzugsweise als Rutsche ausgebildet, die eine Brücke zu einer Fördereinrichtung für Melonenstücke bilden kann. Die Rutsche ist an dem der Messerplatte zugewandten Aufgabeende vorzugsweise nachgiebig aufgehängt. Auf die Rutsche auftreffende Melonenstücke können beim Auftreffen auf die Rutsche noch im Schneidvorgang, also axial nach unten gedrückt werden, wodurch die Rutsche ein Gegenlager bilden kann.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.
Fig. 1 zeigt schematisch eine Seitenansicht eines Melonenschneiders,
Fig. 2 zeigt schematisch eine Draufsicht des Melonenschneiders nach Fig. 1,
Fig. 3 zeigt schematisch eine Seitenansicht eines in einem Halte- und Befestigungsring angeordneten Messers,
Fig. 4 zeigt schematisch eine Draufsicht des Messers nach Fig. 3.

Die Erfindung betrifft einen Melonenschneider mit einem Schneidwerkzeug 1, an das eine Behandlungszone 2 für Melonenstücke anschließen kann.

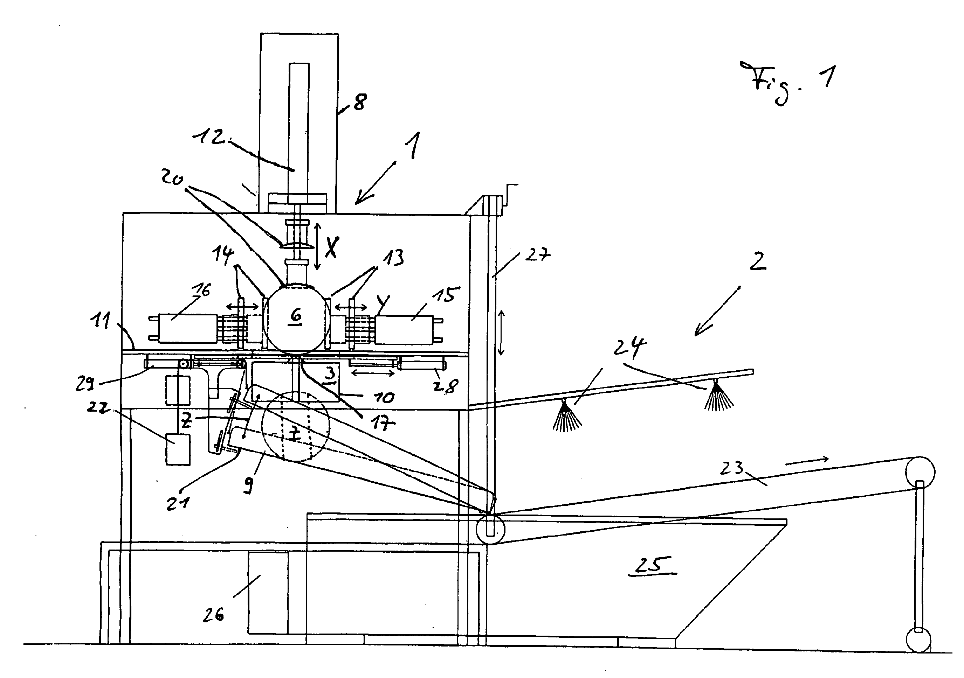

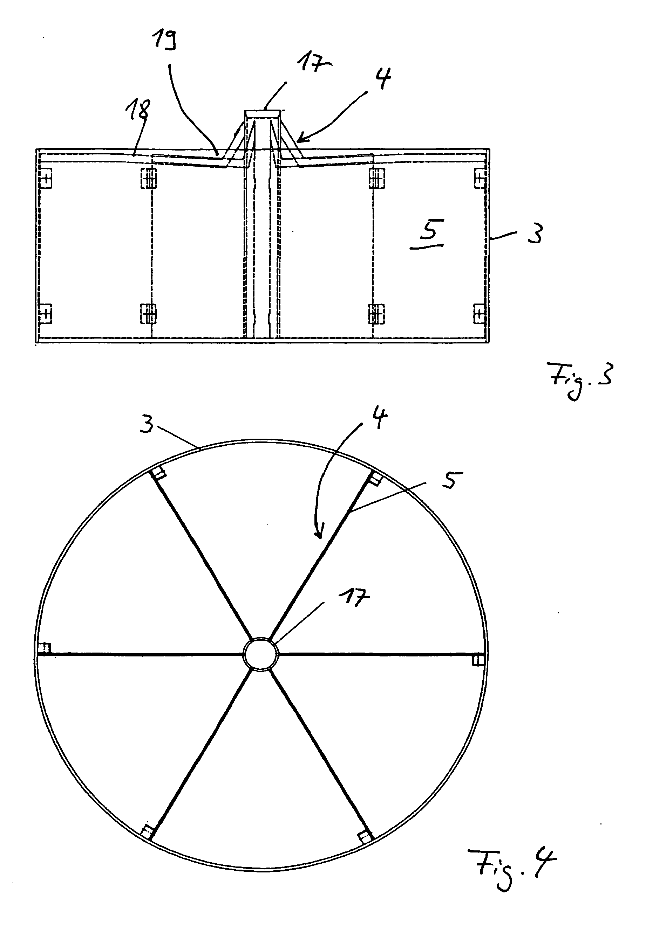

Wie Fig. 1 bis Fig. 4 zeigen, umfasst das Schneidwerkzeug 1 ein in einem Halte- und Befestigungsring 3 angeordnetes Messer 4. Der Halte- und Befestigungsring 3 bildet ein Messergehäuse. Das Messer 4 ist in Sternenform geteilt, so dass einzelne Messerklingen 5 einen Messerblock bilden. Bevorzugt ist ein Messer 4 mit einem 4-oder 6-Teiler an Messerklingen 5 als Messerblock vorgesehen. Das Messer 4 dient dazu, eine Melone 6 in mehrere Stücke 7 zu schneiden. Mittels einer Hubeinrichtung 8 wird das Schneidwerkzeug 1 betätigt. Ferner ist eine Auffangvorrichtung 9 für geschnittene Melonenstücke 7 vorgesehen. Vorzugsweise ist die Auffangvorrichtung 9 als Produktrutsche ausgebildet.

Das Schneidwerkzeug 1 ist erfindungsgemäß ausgebildet als Presse mit einer das Messer 4 aufnehmenden Messerplatte 10, die vorzugsweise unterhalb einer Aufgabe- bzw. Zuführplatte 11 eines Tisches des Schneidwerkzeuges 1 feststehend angeordnet ist. Durch das Messer 4 der Messerplatte 10 wird jeweils eine Melone 6 mittels eines Druckstempels 12 durchgedrückt. Der Druckstempel 12 wird gebildet von dem Schneidzylinder der Hubeinrichtung 8. Die axiale Verfahrbarkeit des Druckstempels 12 ist durch den Doppelpfeil X in Fig. 1 angezeigt. Zur Melonenzentrierung auf der Messerplatte 10 sind Führungsplatten 13, 14 vorgesehen, die einen Zwangslauf der jeweiligen Melone 6 während des Vorschubs des Druckstempels 12 sichern.

Die Führungsplatten 13, 14 werden von einem Backenpaar gebildet, das eine Melone 6 quer zur Vorschubrichtung X des Druckstempels 12 gleitverschieblich einspannt. Jede Führungsplatte 13, 14 ist folglich durch einen Klemmzylinder 15, 16 geradlinig bewegbar in einer Richtung Y quer zur Vorschubrichtung und vorzugsweise parallel zur Messerplatte 10. Die Hin- und Herbewegbarkeit der Führungsplatte 13, 14 ist durch die Doppelpfeile Y in Fig. 1 angezeigt.

Die Führungsplatten 13, 14 sind vorzugsweise als gegenüberstehend angeordnete Backen ausgebildet, die zur Vorschubrichtung X bogenförmig geformt sind, insbesondere unter Anpassung an einen äußeren Umfangsabschnitt des Halte- und Befestigungsringes 3 des Messers 4.

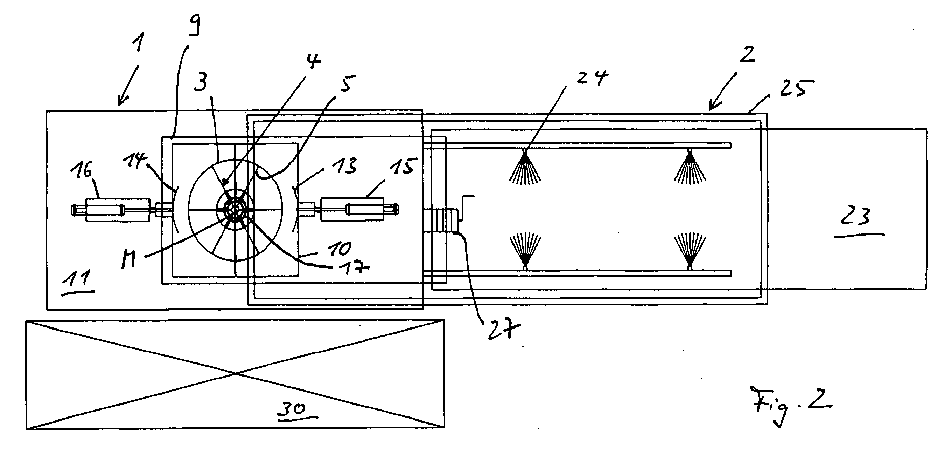

Fig. 1 zeigt die Führungsplatte 13, 14 gemäß einer Darstellung mit durchgezogenen Linien in einer Außereingriffsstellung derselben mit einer Melone 6. Aus dieser Außereingriffsstellung sind die Führungsplatten 13, 14 mittels der Klemmzylinder 15, 16 verfahrbar gegenüber der Messerplatte 10 und dem Druckstempel 12, um eine auf die Messerplatte 10 gesetzte und/oder bereits angedrückte Melone 6 einzuspannen, und zwar mit einer Klemmkraft, die die Melone 6 ausgerichtet zur Messerplatte 10 hält. Die Melone 6 erhält somit für den Schneidvorgang eine fixierte Position, wobei die Führungsplatten 13, 14 aufgrund ihrer axialen Erstreckung zur Vorschubrichtung die fixierte Position entlang eines Vorschubweges sichern, so dass eine Zwangsführung gebildet wird. Die Klemmkraft ist also so gewählt, dass die Melone 6 durch den Druckstempel 12 gegenüber den Führungsplatten 13, 14 gleitverschieblich ist. Diese Eingriffsstellung der Führungsplatten 13, 14 ist in Fig. 1 strichpunktiert angezeigt. Wie Fig. 2 zeigt, können die Führungsplatten 13, 14 konzentrisch zum Mittelpunkt des Messers 4 angeordnet sein.

Das Messer 4 weist vorzugsweise mindestens vier in Sternenform angeordnete Messerklingen 5 auf, die zur Mitte hin spitz vorstehend zulaufen. Dadurch wird ein Zentrumsausstecher 17 gebildet. Die Messerklingen 5 bestehen vorzugsweise aus gehärtetem Stahl. Das Messer 4 bildet ein Segmentiermesser für das Schneiden von Melonen 6 in Melonenteile oder -stücke. Man kann das Messer 4 deshalb auch als Melonenteiler bezeichnen.

Die Messerklingen 5 des Messers 4 besitzen kopfseitig Messerkanten 18, die zur Mitte hin eine Einlaufsenke 19 bilden, die die Messerspitze, d.h. den Zentrumsausstecher 17, umgibt, und zwar vorzugsweise konzentrisch. Die Einlaufsenke 19 ist ein Hilfsmittel zum zentrischen Anschneiden der Melone 6 am Anfang des Schneidvorganges. Die symmetrische Ausrichtung zum Messer 4 wird über die verstellbaren Führungsplatten 13, 14 erreicht.

Der Druckstempel 12 weist einen deckelartigen Druckstempelkopf 20 auf, der eine flächige Druckauflage für eine Melone 6 bildet. Die Außereingriffsstellung des Druckstempelkopfes 20 ist in Fig. 1 mit durchgezogenen Linien gezeigt. Die Eingriffsstellung des Druckstempelkopfes 20 an der Melone 6 zu Beginn des Schneidvorganges ist in Fig. 1 gestrichelt gezeigt. Für den Schneidvorgang baut der Druckstempel 12 eine einstellbare Druckkraft auf für eine an eine Melonenqualität anpassbare Schneidkraft, mit der der Druckstempel 12 in Vorschubrichtung X zum Messer 4 hinbewegt wird und die Melone 6 von dem Druckstempel 12 durch das Messer 4 gedrückt wird. Der Vorschubweg des Druckstempels 12 reicht deshalb vorzugsweise bis zur Messerplatte 10. Eine in Stücke 7 geteilte Melone 6 fällt unter Schwerkraftwirkung auf die Auffangvorrichtung 9, die hier vorzugsweise als Produktrutsche ausgebildet ist.

Das unterhalb der Messerplatte 10 angeordnete Aufnahmeende 21 der Rutsche ist in Vorschubrichtung X des Druckstempels nachgiebig aufgehängt. Hierzu kann die Auffangvorrichtung 9 an dem Aufnahmeende 21 schwenkbar angelenkt sein, wobei ein Gegengewicht 22 eine belastungsabhängige Verschwenkbarkeit ermöglicht. Die Schwenkrichtung ist in Fig. 1 mit dem Doppelpfeil Z angezeigt. Es ist hinreichend, wenn eine Bewegungskomponente parallel der Vorschubrichtung X gerichtet ist.

Bei einer Ausbildung der Auffangvorrichtung 9 als Produktrutsche kann diese zur Übergabe an eine Fördereinrichtung 23 der Behandlungszone 2 für Melonenstücke 7 genutzt werden. In der Behandlungszone 2 können die Melonenstücke beispielsweise mit Desinfektionsmittel besprüht werden. Dazu können Sprühdüsen 24 entlang eines Förderweges der Fördereinrichtung 23 angeordnet sein. Die Sprühdüsen 24 können aus einem Vorratsbecken 25 für Desinfektionsflüssigkeit gespeist werden, aus dem über mindestens eine Pumpe 26 die Sprühdüsen 24 gespeist werden können.

Mittels einer zentralen Höhenverstellung 27 für die Auffangvorrichtung 9 bzw. die Produktrutsche und die Fördereinrichtung 23 kann Einfluss genommen werden auf die Schüttschräge der Auffangvorrichtung 9 in Form einer Produktrutsche. Die Verstellung kann beispielsweise mittels einer Handkurbel erfolgen.

Die Bestückung des Schneidwerkzeuges mit Melonen 6 kann händisch oder maschinell erfolgen. Als Messerschutz können seitlich gegenüber dem Messer 4 verfahrbare Klappen 28, 29 vorgesehen sein, die das Messer 4 beim Aufsetzen einer Melone 6 bis auf den Zentrumsausstecher 17 abdecken. Beim Schneidvorgang werden die Klappen 28, 29 über eine Betätigungseinrichtung auseinandergefahren und das Messer 4 freigelegt.

Bei einer händischen Bestückung des Schneidwerkzeuges 1 ist vorzugsweise vor diesem ein Arbeitspodest 30 aufgestellt.

## Patentansprüche

1. Melonenschneider mit einem Schneidwerkzeug (1), das ein in einem Halte- und Befestigungsring (3) angeordnetes Messer (4) in Sternenform zum Schneiden einer Melone (6) in mehrere Stücke, eine Hubeinrichtung (8) zum Betätigen des Schneidwerkzeuges (1) und eine Auffangvorrichtung (9) für geschnittene Melonenstücke (7) aufweist, das Schneidwerkzeug (1) als Presse ausgebildet ist mit einer das Messer (4) aufnehmenden Messerplatte (10), durch die jeweils eine Melone (6) mittels eines Druckstempels (12) durchdrückbar ist, **dadurch gekennzeichnet, dass** zur Melonenzentrierung auf der Messerplatte (10) Führungsplatten (13, 14) vorgesehen sind, die ein Backenpaar ausbilden, das eine Melone (6) quer zur Vorschubrichtung (X) des Druckstempels (12) gleitverschieblich einspannt, und die einen Zwangslauf der jeweiligen Melone (6) während des Vorschubs des Druckstempels (12) sichern.

2. Melonenschneider nach Anspruch 1, **dadurch gekennzeichnet, dass** die Messerplatte (10) feststehend an einem Tisch des Schneidwerkzeuges (1) angeordnet ist.

3. Melonenschneider nach Anspruch 1 oder 2, **dadurch gekennzeichnet, dass** die Führungsplatten (13, 14) gegenüberstehend angeordnete Backen bilden, die zur Vorschubrichtung (X) bogenförmig geformt sind.

4. Melonenschneider nach einem der Ansprüche 1 bis 3, **dadurch gekennzeichnet, dass** das Messer (4) mindestens vier in Sternenform angeordnete Messerklingen (5) aufweist, die zur Mitte (M) hin spitz vorstehend zulaufen.

5. Melonenschneider nach Anspruch 4, **dadurch gekennzeichnet, dass** die Messerklingen (5) obere Messerkanten (18) aufweisen, die zur Mitte hin eine Einlaufsenke (19) bilden, die einen mittigen Zentrumsausstecher (17) umgibt.

6. Melonenschneider nach einem der Ansprüche 1 bis 5, **dadurch gekennzeichnet, dass** die Auffangvorrichtung (9) als Produktrutsche ausgebildet ist, deren unterhalb der Messerplatte (10) angeordnetes Aufnahmeende (21) in Vorschubrichtung (X) des Druckstempels (12) nachgiebig aufgehängt ist.

7. Melonenschneider nach Anspruch 6, **dadurch gekennzeichnet, dass** die Auffangvorrichtung (9) eine Übergabe von Melonenstücken (7) hin zu einer Fördereinrichtung (23) einer Behandlungszone (2) steuert.

8. Melonenschneider nach einem der Ansprüche 1 bis 7, **dadurch gekennzeichnet, dass** der Druckstempel (12) einen deckelartigen Druckstempelkopf (20) aufweist, der eine flächige Druckauflage für eine Melone (6) bildet.

9. Melonenschneider nach einem der Ansprüche 1 bis 8, **dadurch gekennzeichnet, dass** der Druckstempel (12) eine einstellbare Druckkraft aufbaut für eine an eine Melonenqualität anpassbare Schneidkraft.

## Claims

1. Melon cutter having a cutting tool (1) which has a star-shaped cutter (4), which is arranged in a holding and securing ring (3), for cutting a melon (6) into a plurality of pieces, a lifting device (8) for actuating the cutting tool (1) and a collecting arrangement (9) for cut melon pieces (7), the cutting tool (1) is configured as a press having a cutter plate (10) which accommodates the cutter (4) and through which in each case one melon (6) can be pushed by means of a pressure ram (12), **characterized in that**, in order to centre the melon on the cutter plate (10), there are provided guide plates (13, 14), which form a pair of jaws that clamp a melon (6) transversely to the advancing direction (X) of the pressure ram (12) in a sliding manner, and which ensure forced movement of the respective melon (6) during the advancement of the pressure ram (12).

2. Melon cutter according to Claim 1, **characterized in that** the cutter plate (10) is arranged in a stationary manner on a table of the cutting tool (1).

3. Melon cutter according to Claim 1 or 2, **characterized in that** the guide plates (13, 14) form jaws that are arranged opposite one another and are formed in a curved manner with respect to the advancing direction (X).

4. Melon cutter according to one of Claims 1 to 3, **characterized in that** the cutter (4) has at least four cutter blades (5) which are arranged in a star shape and run, protruding in a pointed manner, towards the middle (M).

5. Melon cutter according to Claim 4, **characterized in that** the cutter blades (5) have upper cutting edges (18) which form, towards the middle, a run-in hollow (19), which surrounds a central corer (17).

6. Melon cutter according to one of Claims 1 to 5, **characterized in that** the collecting arrangement (9) is configured as a product chute, the receiving end (21) of which, which is arranged beneath the cutter plate (10), is suspended in a yielding manner in the advancing direction (X) of the pressure ram (12).

7. Melon cutter according to Claim 6, **characterized in that** the collecting arrangement (9) controls the transfer of melon pieces (7) towards a conveying device (23) of a treatment zone (2).

8. Melon cutter according to one of Claims 1 to 7, **characterized in that** the pressure ram (12) has a lid-like pressure-ram head (20) which forms a two-dimensional pressure contact surface for a melon (6).

9. Melon cutter according to one of Claims 1 to 8, **characterized in that** the pressure ram (12) builds up a settable pressure force for a cutting force that is adaptable to a melon quality.

## Revendications

1. Découpeur de melons avec un outillage de découpe (1) qui comporte un couteau (4) disposé dans un anneau de retenue et de fixation (3) en forme d'étoile pour découper un melon (6) en plusieurs morceaux, un dispositif élévateur (8) pour actionner ledit outil de découpe (1)" et un dispositif de collecte (9) pour les morceaux de melon découpés (7), ledit outillage de découpe (1) étant agencé sous forme de presse, avec une platine de couteau (10) portant ledit couteau (4), et à travers laquelle platine de couteau (10) peut être poussé un melon (6) à la fois, au moyen d'un poussoir (12), **caractérisé en ce que** des plaques de guidage (13, 14) sont agencées pour centrer le melon sur ladite platine de couteau (10) et forment une paire de mors, laquelle est mobile en translation par glissement et maintient un melon (6) perpendiculairement à la direction d'avance (X) dudit poussoir (12), et qui contrôle une course forcée de chaque melon (6) pendant le mouvement d'avance dudit poussoir (12).

2. Découpeur de melons selon la revendication 1, **caractérisé en ce que** ladite platine de couteau (10) est agencée et fixée sur une table dudit outillage de découpe (1).

3. Découpeur de melons selon la revendication 1 ou 2, **caractérisé en ce que** lesdites plaques de guidage (13, 14) forment des mors opposés, qui sont incurvés par rapport à ladite direction d'avance (X).

4. Découpeur de melons selon une des revendications 1 à 3, **caractérisé en ce que** ledit couteau (4) comporte au moins quatre lames de couteau (5) disposées en étoile, qui sont saillantes en pointe au milieu (M) dudit couteau (4).

5. Découpeur de melons selon la revendication 4, **caractérisé en ce que** lesdites lames de couteau (5) comportent des arêtes de couteau supérieures (18), qui forment en leur milieu un creux de guidage (19) qui contourne un piqueur de centre (17) centré.

6. Découpeur de melons selon une des revendications 1 à 5, **caractérisé en ce que** ledit dispositif de collecte (9) est constitué sous la forme d'une rampe pour les produits, dont une extrémité de réception (21) est accrochée de façon élastique sous ladite platine de couteau (10) dans la direction d'avance (X) dudit poussoir (12).

7. Découpeur de melons selon la revendication 6, **caractérisé en ce que** ledit dispositif de collecte (9) commande un transfert desdits morceaux de melon (7) jusqu'à une installation de convoyage (23) d'une zone de conditionnement (2).

8. Découpeur de melons selon une des revendications 1 à 7, **caractérisé en ce que** ledit poussoir (12) comporte une tête de poussoir (20) formant couvercle, qui constitue une surface d'appui plane pour un melon (6).

9. Découpeur de melons selon une des revendications 1 à 8, **caractérisé en ce que** ledit poussoir (12) a une force de poussée réglable pour adapter une force de coupe convenant à une qualité de melon déterminée.
